# EUROPEAN PATENT SPECIFICATION

(11) **EP 1 129 135 B1**
(45) Date of publication and mention of the grant of the patent: **03.12.2003**
(21) Application number: 99923012.1
(22) Date of filing: 13.05.1999
(51) Int. Cl.: C08L 23/16, C08L 23/26, C08L 23/12

(54) **POLYPROPYLENE THERMOPLASTIC ELASTOMER COMPOSITIONS HAVING IMPROVED PROCESSING PROPERTIES AND PHYSICAL PROPERTY BALANCE**
THERMOPLASTISCHE POLYPROPYLEN-ELASTOMERZUSAMMENSETZUNGEN MIT VERBESSERTEN VERARBEITUNGSEIGENSCHAFTEN UND AUSGEGLICHENEN PHYSIKALISCHEN EIGENSCHAFTEN
COMPOSITIONS ELASTOMERES THERMOPLASTIQUES ET POLYPROPYLENIQUES POSSEDANT DES APTITUDES AU TRAITEMENT AMELIOREES ET DES PROPRIETES PHYSIQUES EQUILIBREES

(30) Priority: 08.06.1998 US 93477
(43) Date of publication of application: 05.09.2001
(73) Proprietor: Advanced Elastomer Systems, L.P., Akron, Ohio 44311-1059 (US); ExxonMobil Chemical Patents Inc., Baytown, TX 77522 (US)
(72) Inventor: ELLUL, Maria, D., Silver Lake Village, OH 44224 (US); MEKA, Prasadarao, Seabrook, TX 77586 (US); WANG, Kang-Bo, Copley, OH 44321 (US); WANG, Yu, Feng, Houston, TX 77062 (US)
(74) Representative: Weber, Thomas, Dr.Dipl.-Chem.
(86) International application number: US9910569
(87) International publication number: WO99064510

(56) References cited:
- EP-A- 0 618 259
- EP-A- 0 794 226
- WO-A-96/35751
- WO-A1-96/35371
- JP-A- 8 100 090
- JP-A- 9 157 426
- US-A- 5 786 403

## Description

### BACKGROUND OF THE INVENTION

### FIELD OF THE INVENTION:

The present invention relates generally to thermoplastic elastomer compositions comprising a blend of polypropylene polymer and at least partially cured or non-cured elastomer having both improved processability and good physical properties.

### DESCRIPTION OF THE PRIOR ART:

A thermoplastic elastomer is generally defined as a polymer or blend of polymers that can be processed and recycled in the same way as a conventional thermoplastic material, yet has properties and performance similar to that of vulcanized rubber at service temperatures. Blends or alloys of plastic and elastomeric rubber have become increasingly important in the production of high performance thermoplastic elastomers, particularly for the replacement of thermoset rubber in various applications.

Polymer blends which have a combination of both thermoplastic and elastic properties are generally obtained by combining a thermoplastic polymer with an elastomeric composition in a way such that the elastomer is intimately and uniformly dispersed as a discrete particulate phase within a continuous phase of the thermoplastic. Early work with vulcanized compositions is found in U.S.-A-No. 3,037,954, which discloses static vulcanization as well as the technique of dynamic vulcanization wherein a vulcanizable elastomer is dispersed into a resinous thermoplastic polymer and the elastomer is cured while continuously mixing and shearing the polymer blend. The resulting composition is a microgel dispersion of cured elastomer, such as EPDM rubber, butyl rubber, chlorinated butyl rubber, polybutadiene or polyisoprene in an uncured matrix of thermoplastic polymer such as polypropylene.

Depending on the ultimate application, such thermoplastic elastomer (TPE) compositions may comprise one or a mixture of thermoplastic materials such as propylene homopolymers and propylene copolymers and like thermoplastics used in combination with one or a mixture of cured or non-cured elastomers such as ethylene/propylene rubber; EPDM rubber, diolefin rubber, butyl rubber or similar elastomers. TPE composition may also be prepared where the thermoplastic material used also includes an engineering resin having good high temperature properties, such as a polyamide or a polyester, used in combination with a cured or non-cured elastomer. Examples of such TPE compositions and methods of processing such compositions. including methods of dynamic vulcanization, may be found in U.S.-A-4,130,534: 4,130,535; 4,594,390; 5,177,147; and 5,290,886, as well as in WO-A-92/02582.

TPE compositions are normally melt processed using conventional thermoplastic molding equipment such as by injection molding, compression molding, extrusion, blow molding or other thermoforming techniques. In such TPE compositions, the presence of the elastomeric component does not necessarily improve the processability of the composition. In fact, where the elastomeric component is partially or fully cured (cross-linked) in situ during the mixing of the TPE polymer components (dynamically vulcanized), or where a dynamically vulcanized TPE composition is further processed, there are heavier demands placed upon processing machinery as compared with the processing of a thermoplastic composition which is free of cured elastomer. Polypropylenes normally used as a thermoplastic component in TPE compositions are conventional Ziegler/Natta catalyzed crystalline polymers having a melt flow rate in the range of 0.7 to 5dg/min, and a molecular weight distribution (Mw/Mn) of from about 3 to 4. However, TPE compositions containing these materials are difficult to process.

EP-A-0794226 relates to a foamable olefin thermoplastic elastomer composition comprising a partially cross-linked thermoplastic elastomer composition, long-chain branch-containing polypropylene and a foaming agent.

WO-A-96/35751 relates to polyolefin compositions comprising 20 to 50 parts by weight of a particular propylene polymer having a molecular weight distribution greater than 3.5 and 50 to 80 parts by weight of an elastomeric ethylene copolymer having a low enthalpy of fusion and a narrow molecular weight distribution.

Conventional methods for improving processability or flow in TPE compositions containing polypropylene involve either a reduction in the cure state where the TPE is vulcanized, the use of a polypropylene component having a relatively low molecular weight (and thus a relatively high melt flow rate) and the addition of high levels of diluent processing oil to the composition. Unfortunately, while each of these techniques do provide some improvement in processability, a penalty is paid in terms of a diminishment in certain physical properties of the composition resulting in lower mechanical properties, e.g., tensile strength, elongation, toughness, modulus and heat distortion temperature. Elasticity as measured by tension set and compression set may also be compromised.

### SUMMARY OF THE INVENTION

The present invention provides a thermoplastic elastomer composition comprising a mixture of:
a) a polypropylene polymer composition having a melt flow rate in the range of from 0.5 to 5 dg/min. and a molecular weight distribution M_{w}/Mₙ of 6 to 15; and
b) a rubber setected from the group consisting of monoolefin copolymer rubbers, isobutylene copolymer rubbers, diolefin rubbers and mixtures thereof wherein said rubber is present at a level of 10 to 90 weight percent based on the total polymer content of said composition and wherein said rubber has been fully crosslinked by dynamic vulcanization.

The invention is based on the discovery that the utilization of polypropylene polymer composition having melt flow rate (MFR) and molecular weight distribution (MWD) values within the above-described parameters gives rise to thermoplastic elastomer compositions (TPEs), including dynamically vulcanized compositions (DVAs), which are more processable than TPEs containing conventional polypropylenes having an MFR in the range of 0.7 to 5 and MWD of 3 to 4. Because of this improved processability, conventional techniques for improving processability which detract from physical properties of the composition, e.g., inclusion of high levels of processing oil or use of high MFR polypropylene as the polypropylene component of the composition, can be avoided.

### DETAILED DESCRIPTION OF THE INVENTION

Following is a description of the various ingredients which may be used to formulate the TPE compositions of this invention.

### Polypropylene Composition

Polypropylene compositions suitable for use in the present invention have a melt flow rate (MFR) from 0.5 to 5dg/min., more preferably from 0.5 to 4 dg/min., and a molecular weight distribution of greater than 5.5 up to 20, more preferably from 6 to 15. Molecular weight distribution or polydispersity, is defined as the weight average molecular weight (Mw) divided by the number average molecular weight (Mn) of the polypropylene composition. Mw and Mn of the polypropylene may be determined either using Gel Permeation Chromatography (GPC) or by rheology as described in Zeichner et al. "A Comprehensive Evaluation of Polypropylene Melt Rheology," Proc. 2^{nd} World Congress, Chem. Eng., Vol. 6, pp. 333-337 (1981). Polypropylenes having MFR values within the above parameters as measured by either GPC or rheology are suitable for use in this invention. MFR is a measure of the ability of the polymer to flow and is reported as dg/min. MFR is determined in accordance with ASTM D 1238 (condition L). Polypropylenes suitable for use herein may be made using conventional Ziegler Natta, metallocene or mixed metallocene catalysts by conventional solution or gas phase reactor polymerization processes. Because it is difficult to adjust polymerization conditions in a single reactor to produce polypropylene having both an MFR in the 0.5 to 5dg/min. range and an average MWD of greater than 5.5 up to 20, the polypropylene is more readily prepared by blending at least two different grades of polypropylene, one having an MFR of less than 0.5 dg/min. and at least one other having an MFR greater than 3 dg/min. Alternatively, polypropylene compositions meeting the above parameters may be prepared from a mixture of three polypropylenes, one having an MFR less than 1 dg/min., a second having an MFR greater than 1 dg/min. and a third having an MFR greater than 4dg/min. These mixtures may be prepared by combining polypropylenes prepared in separate reactors under differing polymerization conditions or by sequential polymerization of monomer in at least two separate reactor zones wherein differing polymerization conditions in each zone favor the production of polypropylene having different MFR and MWD properties.

Metallocene catalysts which may be used to polymerize polypropylenes used in this invention are one or more compounds represented by the formula Cpₘ Mₙ X_{q} wherein Cp is a cyclopentadienyl ring which may be substituted, or derivative thereof which may be substituted, M is a Group 4, 5, or 6 transition metal, for example, titanium, zirconium, hafnium, vanadium, niobium, tantalum, chromium, malybdenum and tungsten, R is a hydrocarbyl group or hydrocarboxy group having from one to 20 carbon atoms, X is a halogen, and m=1-3, n=0-3, q=0-3, and the sum of m+n+q is equal to the oxidation state of the transition metal.

Methods for making and using matallocenes in polymerization reactions are very well known in the art. For example, metallocenes are detailed in US-A-4,530,914; 4,542,199; 4,769,910; 4,808,561; 4,871,705; 4,933,403; 4,937,299; 5,017,714; 5,026,798; 5,057,475; 5,120,867; 5,278,119; 5,304,614; 5,324,800; 5,350,723; and 5,391,790.

The Ziegler-Natta catalysts useful in the preparation of polypropylenes of the present invention may be solid titanium supported catalyst systems such as described in US-A-5159021. Briefly, the Ziegler-Natta catalyst can be obtained by: (1) suspending a dialkoxy magnesium compound in an aromatic hydrocarbon that is liquid at ambient temperatures; (2) contacting the dialkoxy magnesium-hydrocarbon composition with a titanium halide and with a diester of an aromatic dicarbocylic acid; and (3) contacting the resulting functionalized dialkoxy magnesium-hydrocarbon composition of step (2) with additional titanium halide.

The Ziegler-Natta to-catalyst is preferably an organoaluminum compound that is halogen free. Suitable halogen free organoaluminum compounds are, in particular, branched unsubstituted alkylaluminum compounds of the.formula AIR where R denotes an alkyl radical having 1 to 10 carbon atoms, such as for example, trimethylaluminum, triethylatuminum, triisobutylaluminum and tridiisobutylaluminum. Additional compounds that are suitable for use as a co-catatyst are readily available and amply disclosed in the prior art, including US-A-4,990,477, which is incorporated herein by reference. The same or different Ziegler-Natta catalyst(s) can be used in both the initial and subsequent polymerization steps.

Electron donors are typically used in two ways in the formation of Ziegler-Natta catalysts and catalyst systems. An internal electron donor may be used in the formation reaction of the catalyst as the transition metal halide is reacted with the metal hydride or metal alkyl. Examples of internal electron donors include amines, amides, ethers, esters, aromatic esters, ketones, nitriles, phosphines, stilbenes, arsines. phosphoramides, thioethers, thioesters, aldehydes, alcoholates, and salts of organic acids. In conjunction with an internal donor, an external electron donor is also used in combination with a catalyst. External electron donors affect the level of stereoregularity and MFR in polymerization reactions. External electron donor materials include organic silicon compounds, e.g., tetraethoxysilane and cicyclopentydiniethoxysilane. Internal and external type electron donors are described, for example, in US-A-4,535,068. The use of organic silicon compounds as external electron donors are described, for example, in U.S.-A-4,218,339; 4,395,360; 4,328,122; and 4,473,660.

Polypropylenes suitable for use herein are at least partially crystalline materials having an Mn in the range of 10,000 to 250,000 and include polypropylene homopolymers as well as reactor copolymers of propylene which can contain up to 20 wt% of ethylene or an alphaolefin comonomer of 4 to 16 carbon atoms or mixtures thereof. Thus, the term "polypropylene" as used herein intended to cover both hocriopolymers and copolymers.

The composition of the invention may also contain one or more other thermoplastic polymer components in addition to the polypropylene component described above. These include other monoolefin polymers or copolymers based on monomers having 2-6 carbon atoms such as ethylene, 1-butene, isobutylene, 1-pentene and the like.

### Additional thermoplastic polymers.

In addition to the polypropylene polymer composition and other polyolefin components, the composition may also contain one or more other thermoplastic polymers selected from the group consisting of polyamides, polyimides, polyesters, polycarbonates, polysulfones, polylactones, polyacetals, acrylontrile/butadieric/styrene copolymer resins, polyphenylene oxides, ethylene/carbon monoxide copolymers, polyphenylene sulfides, polystyrene, styrene/acrylonitrile copolymer resins, styrene/maleic anhydride copolymer, resins, aromatic polyketones and mixtures thereof.

Suitable thermoplastic polyamides (nylons) comprise crystalline or resinous, high molecular weight solid polymers including copolymers and terpolymers having recurring amide units within the polymer chain. Polyamides may be prepared by polymerization of one or more epsilon lactams such as caprolactam, pyrrolidione, lauryllactam and aminoundecanoic lactam, or amino acid, or by condensation of dibasic acids and diamines. Both fiber-forming and molding grade nylons are suitable. Examples of such polyamides are polycaprolactam (nylon 6), polylauryllactam (nylon 12), polyhexamethyleneadipamide (nylon-6,6), polyhexamethyleneazelamide (nylon-6,9), polyhexamethylenesebacamide (nylon 6,10), polyhexamethyleneisophthalamide (nylon-6,IP) and the condensation product of 11-amino-undecanoic acid (nylon 11). Commerically available thermoplastic polyamides may be advantageously used in the practice of this invention, with linear crystalline polyamides having a softening point or melting point between 160°C-230°C being preferred.

Suitable thermoplastic polyesters which may be employed include the polymer reaction products of one or a mixture of alphatic or aromatic polycarboxylic acids, esters of anhydrides and one or a mixture of diols. Examples of satisfactory polyesters include poly (trans-1,4-cyclohexylene C₂₋₆ alkane discarbaoxylates such as poly (trans-1,4-cyclohexylene succinate) and poly (trans-1,4 cyclohexylene adipate);poly (cis or trans-1,4-cyclohexanedimethylene) alkanedicarboxylates such as poly (cis 1,4-cyclohexane-dimethylene) oxylate and poly (cis-1,4-cyclohexanedimethylene) succinate, poly (C₂₋₄ alkylene terephthalates) such as polyethyleneterephthalate and polytetramethyleneterephthalate, poly (C₂₋₄ alkylene isophthalates) such as polyethyleneisophthalate and polytetramethylene isophthalate and like materials. Preferred polyesters are derived from aromatic dicarboxylic acids such as naphthalenic or phthalic acids and C₂ toC₄ diols, such as polyethylene terephthalate and polybutylene terephthalate. Preferred polyesters will have a melting point in the range of 160° to 260°.

Poly(phenylene ether) (PPE) thermoplastic engineering resins which may be used in accordance with this invention are well known, commercially available materials produced by the oxidative coupling polymerization of alkyl substituted phenols. They are generally linear polymers having a glass transition temperature in the range of 190°C to 235°C. Examples of preferred PPE polymers include poly(2,6-dialkyl-1,4 phenylene ethers) such as poly(2,6 dimethyl-1,4-phenytenether), poly 2-methyl-6-ethyl-1, 4 phenylene ether), poly-(2,6-dipropyl-1,4-phenylene ether) and poly (2-ethyl-6-propyl-1,4-phenylene ether). These polymers, their method of preparation and blends with polystyrene are further described in U.S.-A-3,383,435.

Other thermoplastic resins which may be used include the polycarbonate analogs of the polyesters described above such as segmented poly(ether, cophthalates); polycaprolactone polymers; styrene resins such as copolymers of styrene with less than 50 mole% of acrylonitrile (SAN) and resinous copolymers of styrene, acrylonitrile and butadiene (ABS); sulfone polymers such as polyphenylsulfone, and like engineering resins as are known in the art.

### Olefinic Rubber

Suitable rubbery materials which may be used include monoolefin copolymeric rubbers, isobutylene copolymers and diolefin rubbers, as well as mixtures thereof.

Suitable monoolefin copolymer rubbers comprise non-polar, essentially non-crystalline,.rubbery copolymers of two or more alpha-monoolefins, preferably copolymerized with at least one polyene, usually a diene. Saturated monoolefin copolymer rubber, for example, ethylene-propylene copolymer rubber (EPM) can be used. However, unsaturated monoolefin rubber such as EPDM rubber is more suitable EPDM is a terpolymer of ethylene, propylene and a non-conjugated diene. Satisfactory non-conjugated dienes include 5-ethylidene-2-norbornene (ENB); vinylnorbornene (VNB); 1,4-hexadiene; 5-methylene-2-norbornene (MNB); 1,6-octadiene; 5-methyl-1,4-hexadiene; 3,7-dimethyl-1,6-octadiene; 1,3-cyclopentadiene; 1,4-cyclohexadiene; dicyclopentadiene (DCPD); and the like.

Butyl rubbers are also useful in the compositions of the invention. As used in the specification and claims, the term "butyl rubber" includes copolymers of an isoolefin and a conjugated diene, terpolymers of an isoolefin, a conjugated diene and a divinyl aromatic monomer, and the halogenated derivatives of such copolymers and terpolymers. The useful butyl rubber copolymers comprise a major portion of isoolefin and a minor amount, usually less than 30 wt%, of a conjugated diene, and are preferably halogenated, e.g., brominated, to facilitate curing. The preferred copolymers comprise 85-99.5 wt% of a C₄₋₇ isoolefin such as isobutylene and 15.05 wt% of a multiolefin of 4-14 carbon atoms, such as isoprene, butadiene, dimethyl butadiene and piperylene. Commercial butyl rubber, useful in the invention, is a copolymer of isobutylene and minor amounts of isoprene. Other butyl co- and terpolymer rubbers are illustrated by the description in U.S.-A-4,916,180.

Another suitable copolymer within the scope of the olefinic rubber of the present invention is a copolymer of a C₄₋₇ isomonoolefin and a paraalkylstyrene, and preferably a halogenated derivative thereof. The amount of halogen in the copolymer, predominantly present as benzylic halogen, is from 0.1 to 10 wt.%. A preferred example is the brominated copolymer of isobutylene and paramethylstyrene. These copolymers are more fully described in U.S.-A-5,162,445.

Another olefinic rubber class which may be used are diolefins such as polybutadiene as well as elastomeric random copolymers of butadiene with less than 50 wt% of styrene or acrylonitrile. Other suitable diolefin materials include natural rubber or synthetic polyisoprene. Mixtures comprising two or more of the olefmic rubbers may also be used. Depending upon the desired application, the amount of olefinic rubber present in the composition may range from 10 to 90 wt% of the total polymer content of the composition. In most applications and particularly where the rubber component is dynamically vulcanized, the rubber component will constitute less than 70 wt%, more preferably less than 50 wt%, and most preferably 10-40 wt% of the total polymer content of the composition.

### Additives

The compositions of the invention may include plasticizers, curatives and may also include reinforcing and non-reinforcing fillers, antioxidants, stabilizers, rubber processing oil, plasticizers, extender oils, lubricants, antiblocking agents, anti-static agents, waxes, foaming agents, pigments, flame retardants and other processing aids known in the rubber compounding art. Such additives can comprise up to 50 wt% of the total composition. Fillers and extenders which can be utilized include conventional inorganics such as calcium carbonate, clays, silica, talc titanium dioxide, carbon black and the like. The rubber processing oils generally are paraffinic, naphthenic or aromatic oils derived from petroleum fractions, but are preferably paraffinic. The type will be that ordinarily used in conjunction with the specific rubber or rubbers present in the composition, and the quantity based on the total rubber content may range from zero up to 1-200 parts by weight per hundred rubber (phr). Plasticizers such as trimellitate esters or aliphatic esters may also be present in the composition.

### Processing

The olefin rubber component of the thermoplastic elastomer is generally present as small, i.e., micro-size particles within a continuous plastic matrix, although a co-continuous morphology or a phase inversion is also possible depending on the amount of rubber relative to plastic, and the cure system or degree of cure of the rubber. The rubber may be at least partially crosslinked, and preferably is completely or fully crosslinked. The partial or complete crosslinking can be achieved by adding an appropriate rubber curative to the blend of thermoplastic polymer and rubber and vulcanizing the rubber to the desired degree under conventional vulcanizing conditions. However, it is preferred that the rubber be crosslinked by the process of dynamic vulcanization. As used in the specification and claims, the term "dynamic vulcanziation" means a vulcanization or curing process for a rubber contained in a thermoplastic elastomer composition, wherein the rubber is vulcanized under conditions of high shear at a temperature above the melting point of the component thermoplastic. The rubber is thus simultaneously crosslinked and dispersed as fine particles within the matrix thermoplastic, although as noted above other morphologies may also exist. Dynamic vulcanization is effected by mixing the thermoplastic elastomer components at elevated temperature in conventional mixing equipment such as roll mills, Banbury mixers, Brabender mixers, continuous mixers, mixing extruders and the like. The unique characteristic of dynamically cured compositions is that notwithstanding the fact that the rubber component is partially or fully cured, the compositions can be processed and reprocessed by conventional plastic processing techniques such as extrusion, injection molding, blow molding and compression molding. Scrap or flashing can be salvaged and reprocessed.

Those ordinarily skilled in the art will appreciate the appropriate quantities, types of cure systems, and vulcanization conditions required to carry out the vulcanization of the rubber. The rubber can be vulcanized using varying amounts of curative, varying temperatures and varying time of cure in order to obtain the optimum crosslinking desired. Any known cure system for the rubber can be used, so long as it is suitable under the vulcanization conditions with the specific olefinic rubber or combination of rubbers being used and with the thermoplastic component. These curatives include sulfur, sulfur donors. metal oxides, resin systems, peroxide-based systems, hydrosilation curatives containing platinum or peroxide catalysts, and the like, both with and without accelerators and co-agents. Such cure systems are well known in the art and literature of vulcanization of elastomers.

The terms "full vulcanized" and "completely vulcanized" mean that the rubber component to be vulcanized has been cured to a state in which the elastomeric properties of the crosslinked rubber are similar to those of the rubber in its conventional vulcanized state, apart from the thermoplastic elastomer composition. The degree of cure can be described in terms of gel content or, conversely, extractable components. Alternatively the degree of.cure may be expressed in terms of crosslink density. All of these descriptions are well known in the art as for example disclosed in U.S.-A-5,100,947 and 5,157,081.

Melt processing temperatures will generally range from above the melting point of the highest nielting polymer present in the TPE composition up to 300°C. Preferred processing temperatures will range from 140°C up to 250°C, more preferably from 150°C up to 225°C.

The following examples are illustrative of the invention.

A number of dynamically vulcanized compositions as illustrated in Tables II, IV, V, VI, and VII were prepared by melt mixing a mixture of olefinic rubber, propylene polymer, processing oil, curatives and additives as shown in these tables and curing the composition in situ in a high shear mixing device at an elevated temperature of 200°C. Table I identifies the various propylene polymers utilized in these examples. Polypropylenes identified as PP-1 through PP-8 and PP-13 through PP-16 have MWD and MFR values which are outside the greater than 5.5-20 and 0.5 to 5dg/min. range respectively, while PP-9 through PP-12 have values within these ranges. Most of these polypropylenes are commercially available materials except as follows:

PP-9 is a polypropylene mixture made in a three-stage reactor and comprising 45 wt% of a 34 dg/min. MFR polypropylene, 33 wt% of a 1.0 dg/min. polypropylene and 22 wt% of a 0.6 dg/min. MFR polypropylene.

PP-10 is a polypropylene mixture made by blending 50 wt% of a 400 dg/min. MFR polypropylene and 50 wt% of a 0.2 dg/min. MFR polypropylene.

PP-11 is a polypropylene mixture made by blending 23.5 wt% of a 400 dg/min. MFR polypropylene, 17 wt% of a 57 dg/min. MFR polypropylene and 59.5 wt% of a 0.33 dg/min. MFR polypropylene.

Formulations identified by "c" numbers in the table headings are control formulations outside the scope of the invention; formulations identified as EX-1 through EX-10 are within the scope of the invention.

Physical and mechanical properties of each of the cured compositions were measured by the procedures shown in Table VIII.

Physical and mechanical properties of the various control vulcanizates and vulcanizates of the invention are compared in Tables III-VII. In those cases where the controls exhibit similar or better spiral flow. e.g., C-10. C-12, C-15, C-30 and C-32, the data show that good spiral flow is achieved at the expense of one or more mechanical properties such as melt strength (extensional viscosity), tensile strength, elongation, extrusion surface roughness and shear viscosity as measured by automatic capillary theometer (ACR).

Thus, the use of broad MWD polypropylenes as components of DVA compositions in accordance with this invention provide compositions having excellent proeessability while still maintaining an excellent balance of engineering properties such as tensile strength, melt strength. modulus and elongation.

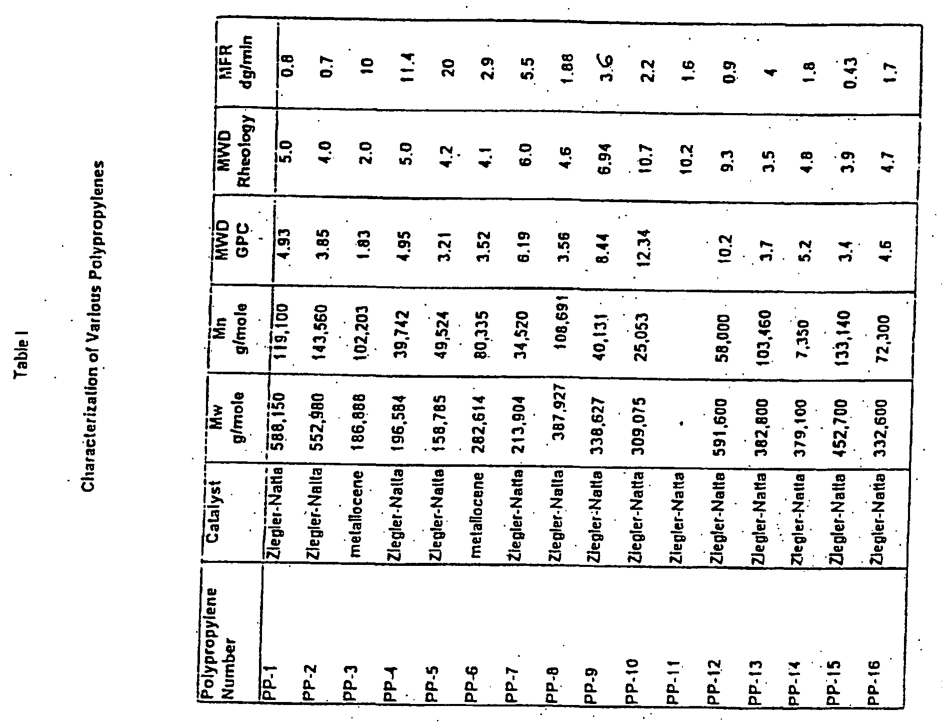

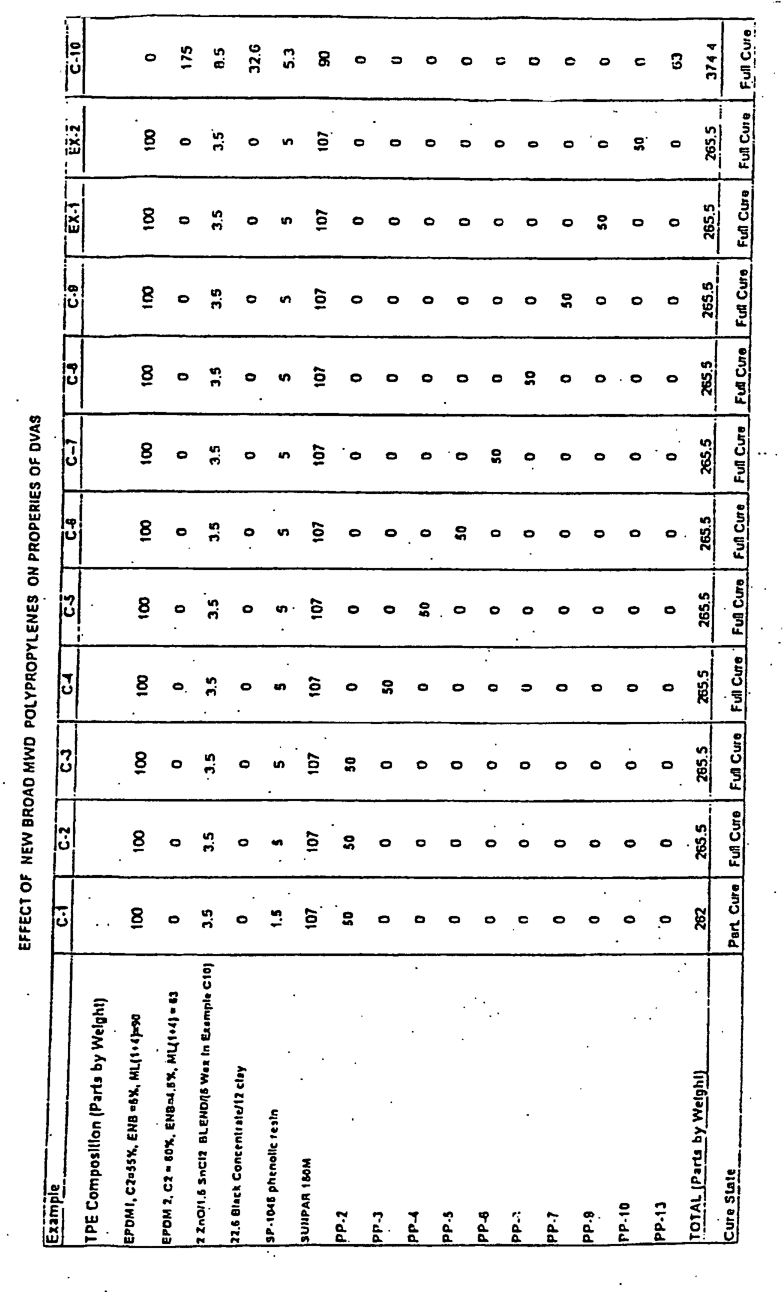

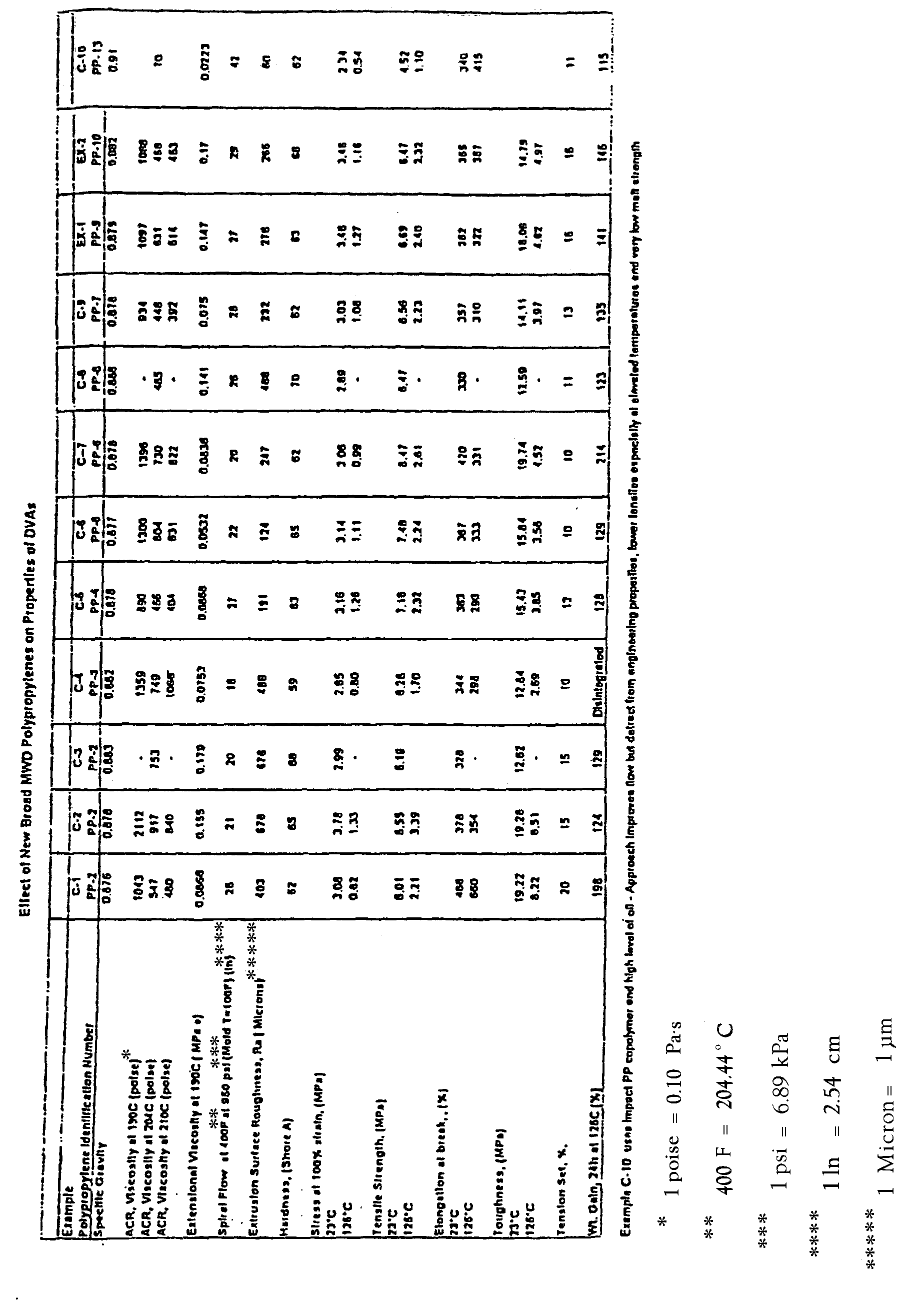

**Table IV**

| Effect of Broad MWD Polyropylenes on Physical And Performence Properties | | | | | | | | | |
|---|---|---|---|---|---|---|---|---|---|
| Example | C-11 | C-12 | C-13 | C-14 | C-15 | C-16 | Ex-3 | Ex-4 | Ex-5 |
| TPE Composition (Parts by Weight) | | | | | | | | | |
| ZnCuSnCl2 blend | 2/1.26 | 2/1.26 | 2/1.26 | 2/1.26 | 2/1.26 | 2/1.26 | 2/1.26 | 2/1.26 | 2/1.26 |
| EPDM 3. C2 = 66%, ENB=3.6%. ML(1+4)=51 | 175 | 175 | 175 | 175 | 175 | 175 | 175 | 175 | 175 |
| ICECAP K CLAY | 10 | 10 | 10 | 10 | 10 | 10 | 10 | 10 | 10 |
| SUNOLITE WAX | 5 | 5 | 5 | 5 | 5 | 5 | 5 | 5 | 5 |
| SP-1045, phenolic resin | 4.5 | 4.5 | 4.5 | 4.5 | 4.5 | 4.5 | 4.5 | 4.5 | 4.5 |
| SUNPAR 150M | 55 | 81 | 55 | 55 | 55 | 55 | 55 | 55 | 55 |
| PP-1, 0.8MFR | 41 | 0 | 0 | 0 | 0 | 0 | 0 | 0 | 0 |
| PP-2 0.7MFR | 0 | 50 | 41 | 41 | 0 | 0 | 0 | 0 | 0 |
| PP-3, 20MFR | 0 | 0 | 0 | 0 | 41 | 0 | 0 | 0 | 0 |
| PP.4, 1.8MFR | 0 | 0 | 0 | 0 | 0 | 41 | 0 | 0 | 0 |
| PP-9, 3.6MFR | 0 | 0 | 0 | 0 | 0 | 0 | 41 | 0 | 0 |
| PP-10, 2.2MFR | 0 | 0 | 0 | 0 | 0 | 0 | 0 | 41 | 0 |
| PP-11, 1.6MFR | 0 | 0 | 0 | 0 | 0 | 0 | 0 | 0 | 41 |
| TOTAL (Perts by Weight) | 290.5 | 325.5 | 290.5 | 290.5 | 290.5 | 290.5 | 290.5 | 290.5 | 290.5 |
| | | | | | | | | | |

| POLYPROPYLENE NUMBER | PP-1 | PP-2 | PP-2 | PP-2 | PP-5 | PP-8 | PP-9 | PP-10 | PP-11 |
|---|---|---|---|---|---|---|---|---|---|
| HARDNESS, (Shore A) | 59 | 66 | 63 | 64 | 57 | 64 | 61 | 60 | 68 |
| Specine gravity | 0.901 | 0.897 | 0.90 | 0.90 | 0.903 | 0.90 | 0.898 | 0.901 | 0.899 |
| Tensile Strangth (psi)* | 688 | 909 | 786 | 819 | 559 | 740 | 686 | 753 | 788 |
| Elongation @ Break,(%) | 353 | 382 | 377 | 420 | 323 | 405 | 364 | 431 | 304 |
| Modulus at 100% elongation. (psi)* | 310 | 382 | 350 | 323 | 293 | 305 | 330 | 318 | 596 |
| WT.GAIN, 24h @ 125C, (%) | 129 | 75 | 117 | 110 | 107 | 113 | 108 | 102 | 130 |
| ROD DRAW | 3.1 | 4.2 | 2.4 | 3.4 | 2.3 | 3.5 | 2.3 | 3 | - |
| TENSION SET@ 23C, (%) | 13 | 13 | 13 | 9 | 12 | 9 | 9 | 10 | 15 |
| Compression Set 22h @ 100C, (%)* | 46 | 57 | 46 | 46 | 37 | 46 | 46 | 46 | - |
| ACR VISCOSITY, @ 190C, (poise)** | 907 | 314 | 803 | - | 116 | | 481 | 515 | |
| ACR VISCOSITY, @ 204C. (poise)** | 366 | 132 | 300 | 370 | 105 | 159 | 250 | 225 | 309 |
| Extrusion Surface Rating, (Microns.)*** | 124 | 85 | 115 | 185 | 127 | 121 | 60 | 57 | 127 |
| Spiral Flow, @ 400F @ 950 psi (in)**** | 26 | 33 | 25 | 25 | 33 | 32 | 33 | 34 | 33 |
| Extensional Viscosity, @ 190c, (Mpa s) | 0.131 | 0.079 | 0.109 | 0.128 | 0.0203 | 0.0729 | 0.133 | 0.158 | 14.5 |
| FOAMABILITY CHARACTERISTICS SPECIFIC GRAVITY, FOAMED PROFILE | 0.35 | - | 0.55 | 0.4 | 0.68 | 0.3 | - | 0.14 | - |
| PROFILE DIAMETER | 0.22 | - | 0.17 | 0.185 | 0.113 | 0.217 | - | 0.332 | - |

| | | | | | | | | | |
|---|---|---|---|---|---|---|---|---|---|
| TPE Example C-12 Ware Cr. more PP: morore now but detract tom rubbery behavior. e.g higher compression set and lowed metting point * 1 psi = 6.89 kPa | | | | | | | | | |
| **1 poise = 0.10 Pa.s | | | | | | | | | |
| ***1 Mikron = 1µm | | | | | | | | | |
| *** 1 in = 2.54 cm | | | | | | | | | |

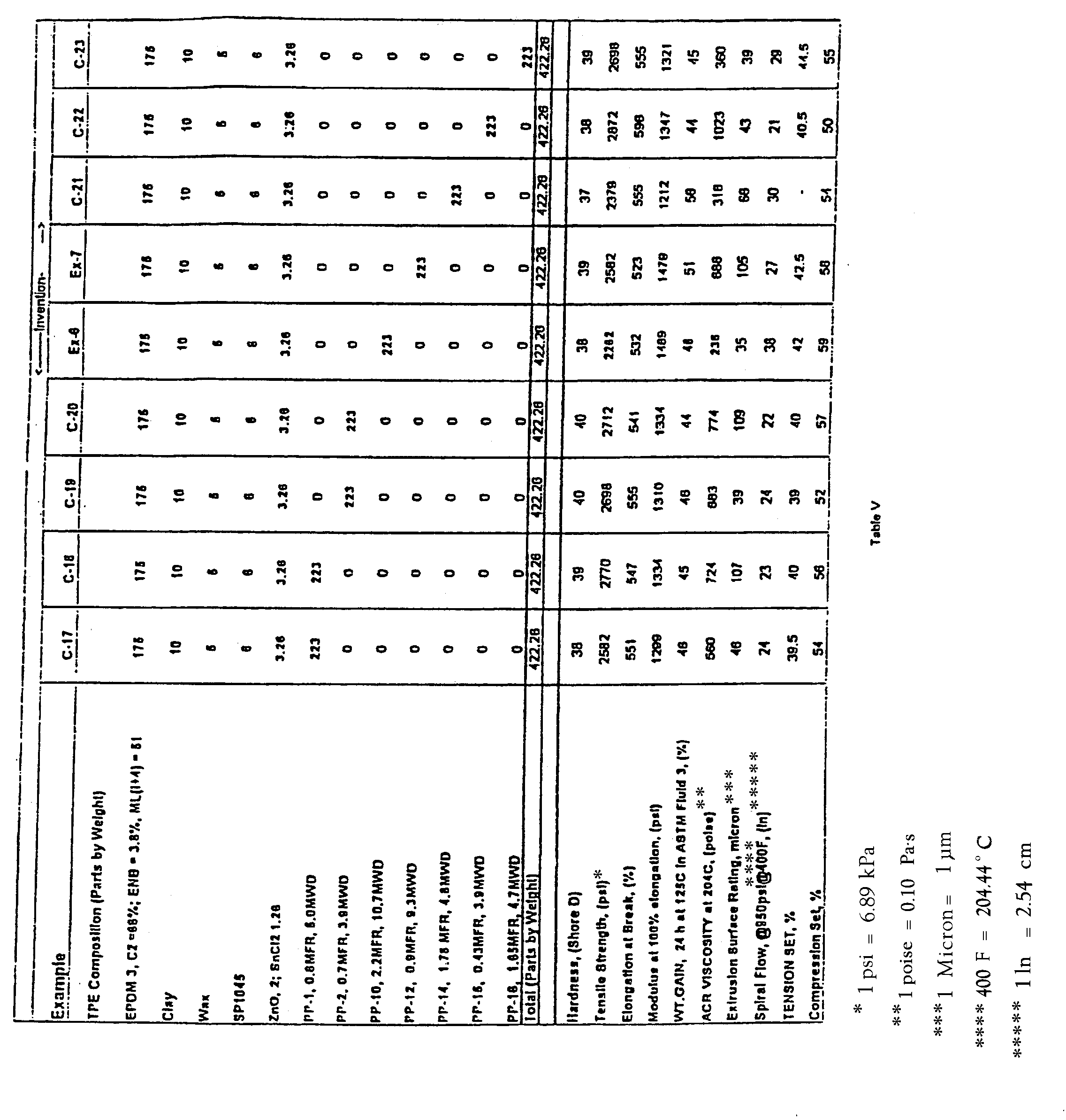

**Table VI**

| TO EVALUATE VARIOUS PP USING BUTYL 268 RUBBER. | | | | | | |
|---|---|---|---|---|---|---|
| Example | C-24 | C-25 | C-26 | Ex-8 | Ex-9 | C-27 |
| TPE Composition (Parts by Weight) | | | | | | |
| BUTYL 268 RUBBER | 100 | 100 | 100 | 100 | 100 | 100 |
| ICECAP K CLAY | 9 | 9 | 9 | 9 | 9 | 9 |
| POWDER BLENO(ZnO/SnCl2) | 5 | 5 | 5 | 5 | 5 | 5 |
| SP-1045 | 5 | 5 | 5 | 5 | 5 | 5 |
| SUNPAR 150M | 100 | 100 | 100 | 100 | 100 | 100 |
| PP-2, 51S07A | 60 | 0 | 0 | 0 | 0 | 0 |
| PP-1, D008M | 0 | 60 | 0 | 0 | 0 | 0 |
| PP-5, FP200F | 0 | 0 | 60 | 0 | 0 | 0 |
| PP-9, 20045-20-001(PLTD1130) | 0 | 0 | 0 | 60 | 0 | 0 |
| PP-10, 20045-20-003 | 0 | 0 | 0 | 0 | 60 | 0 |
| PP-8, 4782 | 0 | 0 | 0 | 0 | 0 | 60 |
| TOTAL (Parts by Weight) | 279 | 279 | 279 | 279 | 279 | 279 |
| | | | | | | |
| Example | C-24 | C-25 | C-26 | Ex-8 | Ex-9 | C-27 |
| Hardness, (Shore A) | 82 | 87 | 82 | 87 | 84 | 84 |
| Specific Gravity | 0.972 | 0.972 | 0.962 | 0.97 | 0.974 | 0.972 |
| Ultimate Tensile Strength, (psi)* | 1115 | 1349 | 780 | 1087 | 1058 | 1248 |
| Elongation at Break, (%) | 441 | 535 | 399 | 494 | 507 | 530 |
| Modulus at 100% Elongation, (psi)* | 669 | 800 | 531 | 774 | 605 | 758 |
| Processability Characteristics ACR VISCOSITY at 204C, (poise)** | 364 | 335 | 74 | 211 | 278 | 200 |
| Extrusion Surface Rating, (Micron)*** | 391 | 909 | 140 | 133 | 232 | 278 |
| Spiral Flow, at 950psi at ****400F, (ins)***** | 28 | 27 | 45 | 39 | 33 | 34 |
| Tension Set. (%) | 35 | 34 | 37 | 35 | 35 | 37 |

| | | | | | | |
|---|---|---|---|---|---|---|
| *1 psi = 6.89 kPa | | | | | | |
| **1 poise = 0.10 Pa.s | | | | | | |
| ***1 Micron = 1µm | | | | | | |
| ****400 F = 204.44°C | | | | | | |
| *****1 in = 2.54 cm | | | | | | |

**TABLE VII**

| EFFECT OF BROAD MWD POLYPROPYLEHES ON. PHYSICAL AND PERFORMANCE PROPERTIES OF TPEs | | | | | |
|---|---|---|---|---|---|
| Examples | C-28 | C-28 | C-30 | Ex-10 | C-32 |
| Composition (Parts by Weight) | | | | | |
| Oil-extended Rubber Blend (VNB-EPDM, *20 phr clay) | 220 | 220 | 220 | 220 | 220 |
| ICECAP K CLAY | 22 | 22 | 22 | 22 | 22 |
| Silicon Hydride 2.2822 (Dow Corning) | 2 | 2 | 2 | 2 | 2 |
| Platinum Catalyst, PC 085(0.11%) | 3.8 | 3.8 | 3.8 | 3.8 | 3.8 |
| SUNPAR 150LW | 56 | 56 | 56 | 56 | 56 |
| STABILIZER SLURRY | 12 | 12 | 12 | 12 | 12 |
| PP-2, 0.7MFR | 50 | 0 | 0 | 0 | 0 |
| PP-1,0.8MFR | 0 | 50 | 0 | 0 | 0 |
| PP-5. 20MFR | 0 | 0 | 50 | 0 | 0 |
| PP-9, 3.6MFR | 0 | 0 | 0 | 50 | 0 |
| PP-8, 1.9MFR | 0 | 0 | 0 | 0 | 50 |
| TOTAL (Parts by Weight) | 365.8 | 365.8 | 365.8 | 365.8 | 365.8 |
| | | | | | |
| HARDNESS. (SHORE A) | 69A | 68A | 62A | 66A | 66A |
| SPECIFIC GRAVITY | 0.951 | 0.952 | 0.953 | 0.954 | 0.945 |
| TENSILE STRENGTH, (MPa) | 6.05 | 6.25 | 4.64 | 5.26 | 5.53 |
| ELONGATION AT BREAK, (%) | 521 | 562 | 454 | 468 | 522 |
| Modulus at 100% elangation, (MPa) | 2.34 | 2.34 | 2.19 | 2.04 | 2.22 |
| WT.GAIN. %, 24h at 125C, Repeat | 105 | 115 | 113 | 107 | 110 |
| ROD DRAW | 2.1 | 2.3 | 2 | 3 | 2.5 |
| COLOR L | 74.91 | 73.96 | 75.6 | 76.11 | 75.37 |
| COLOR a | -1.24 | -1.04 | -1.17 | -1.03 | -0.91 |
| COLOR b | 7.5 | 6.91 | 7.37 | 8.26 | 8.74 |
| COMPRESSION SET, 22H AT 100C, (%) | 50 | 46 | 47 | 46 | 47 |
| TENSION SET,(%) | 12 | 12 | 11 | 9 | 11 |
| Spiral Flow at 950 psi* at 400F** (in)*** | 27 | 28 | 31 | 29 | 29 |
| Extrusion Surface Rating, (micron)**** | 47 | 53 | 45 | 58 | 49 |
| ACR VISCOSITY, at 204C (poise)***** | 320 | 287 | 206 | 326 | 232 |
| EXTENSIONAL VISCOSITY, AT 190C (MPa s) | 0.0586 | 0.069 | 0.0389 | 0.118 | 0.0629 |
| FOAMABILITY S.G. | 0.96 | 0.98 | ** | Best 0.21 | 0.39 |
| PROFILE DIAMETER, (in)*** | 0.148 | 0.151 | ** | 0.276 | 0.2 |

| | | | | | |
|---|---|---|---|---|---|
| *1psi = 6.89kPa | | | | | |
| **Cannot Measure **400 F = 240.44°C | | | | | |
| ***1 in = 2.54 cm | | | | | |
| ****1micron = 1µm | | | | | |
| *****1 poise = 0.10 Pa.s | | | | | |

**Table VIII**

| Test Methods | | |
|---|---|---|
| Property | Units | Procedure |
| Specific Gravity | - | ASTM D-792 |
| Hardness | Shore A or Shore D | ASTM D-2240 |
| Tensile Strength | MPa or psi* | ASTM D-412 |
| Elongation at Break | % | ASTM D-412 |
| 100% Modulus | MPa or psi* | ASTM D-412 |
| Compression Set | % | ASTM D-395(Method B) |
| Tension Set | % | ASTM D-412 |
| Weight Gain | % | ASTMD-471 |
| Extrusion Surface Profilometer | micron** | TPE-0106 |
| ACR Viscosity | poise*** | TPE-0137 |
| Extrusion Rod Draw Ratio | - | TPE-0168 |
| Spiral Flow | ins**** | TPE-0032 |

| | | |
|---|---|---|
| *1 psi = 6.89 kPa | | |
| **1 micron = 1µm | | |
| ***1 poise = 0.10 Pa.s | | |
| ***1 in = 2.54 cm | | |

## Claims

1. A thermoplastic elastomer composition comprising a mixture of:
a) a polypropylene polymer composition having a melt flow rate in the range of from 0.5 to 5 dg/min. and a molecular weight distribution M_{w}/Mₙ of 6 to 15; and
b) a rubber selected from the group consisting of monoolefin copolymer rubbers, isobutylene copolymer rubbers, diolefin rubbers and mixtures thereof, wherein said rubber is present at a level of 10 to 90 weight percent based on the total polymer content of said composition and wherein said rubber has been fully crosslinked by dynamic vulcanization.

2. The composition of claim 1 wherein said polypropylene polymer composition has a melt flow rate in the range of 0.5 to 4 dg/min.

3. The composition of claim 1 wherein said polypropylene polymer composition comprises a mixture of at least two polypropylenes, one having a melt flow rate of less than 0.5 dg/min. and at least one other having a melt flow rate greater than 3 dg/min.

4. The composition of claim 1 wherein said polypropylene polymer composition comprises a mixture of at least three polypropylenes, one having a melt flow rate of less than 0.1 dg/min., a second having a melt flow rate in the range of 1 to 4 dg/min., and a third having a melt flow rate greater than 4 dg/min.

5. The composition of claim 1 wherein said polypropylene polymer composition comprises polypropylene homopolymer.

6. The composition of claim 1 wherein said rubber is selected from the group consisting of ethylene/propylene copolymers, ethylene/propylene/non-conjugated diene terpolymers, and mixtures thereof

7. The composition of claim 1 which further contains an additional thermoplastic polymer component different from component (a).

8. The composition of claim 1 which further contains from : 1 to 200 parts by weight of rubber processing oil per 100 parts by weight of said rubber.

## Patentansprüche

1. Thermoplastische Elastomerzusammensetzung, umfassend eine Mischung aus:
a) einer Polypropylen-Polymerzusammensetzung mit einer Schmelzflussrate im Bereich von 0,5 bis 5 dg/min und einer Molmassenverteilung M_{w}/Mₙ von 6 bis 15 und
b) einem Kautschuk, der ausgewählt ist aus der Gruppe bestehend aus Monoolefin-Copolymer-Kautschuken, Isobutylen-Copolymer-Kautschuken, Diolefinkautschuken und Mischungen davon, wobei der Kautschuk in einer Konzentration von 10 bis 90 Gew.-%, bezogen auf den gesamten Polymergehalt der Zusammensetzung, vorhanden ist und wobei der Kautschuk mittels dynamischer Vulkanisation voll vernetzt worden ist.

2. Zusammensetzung nach Anspruch 1, wobei die Polypropylen-Polymerzusammensetzung eine Schmelzflussrate im Bereich von 0,5 bis 4 dg/min aufweist.

3. Zusammensetzung nach Anspruch 1, wobei die Polypropylen-Polymerzusammensetzung eine Mischung aus wenigstens zwei Polypropylenen umfasst, wobei eines eine Schmelzflussrate von weniger als 0,5 dg/min und wenigstens ein anderes eine Schmelzflussrate von mehr als 3 dg/min aufweist.

4. Zusammensetzung nach Anspruch 1, wobei die Polypropylen-Polymerzusammensetzung eine Mischung von wenigstens drei Polypropylenen umfasst, wobei eines eine Schmelzflussrate von weniger als 0,1 dg/min aufweist, ein zweites eine Schmelzflussrate im Bereich von 1 bis 4 dg/min aufweist und ein drittes eine Schmelzflussrate von mehr als 4 dg/min aufweist.

5. Zusammensetzung nach Anspruch 1, wobei die Polypropylen-Polymerzusammensetzung ein Polypropylen-Homopolymer umfasst.

6. Zusammensetzung nach Anspruch 1, wobei der Kautschuk aus der aus Ethylen/Propylen-Copolymeren, Ethylen/Propylen/nichtkonjugiertes Dien-Terpolymeren und Mischungen davon bestehenden Gruppe ausgewählt ist.

7. Zusammensetzung nach Anspruch 1, die weiterhin eine von Komponente (a) verschiedene zusätzliche thermoplastische Polymerkomponente enthält.

8. Zusammensetzung nach Anspruch 1, die weiterhin 1 bis 200 Gew.-Teile eines Kautschukverarbeitungsöls auf 100 Teile des Kautschuks enthält.

## Revendications

1. Composition élastomère thermoplastique comprenant un mélange de :
a) une composition de polymère de polypropylène ayant un indice de fluidité à chaud dans la gamme de 0,5 à 5 dg/min et une distribution de masse moléculaire Mₚ/Mₙ de 6 à 15 ; et
b) un caoutchouc choisi dans le groupe constitué par les caoutchoucs de copolymère de mono-oléfines, les caoutchoucs de copolymère d'isobutylène, les caoutchoucs de dioléfines et les mélanges de ceux-ci, dans lequel ledit caoutchouc est présent en une teneur de 10 à 90 % en poids par rapport à la teneur totale en polymère de ladite composition et dans lequel ledit caoutchouc a été entièrement réticulé par une vulcanisation dynamique.

2. Composition selon la revendication 1, dans laquelle ladite composition de polymère de polypropylène a un indice de fluidité à chaud dans la gamme de 0,5 à 4 dg/min.

3. Composition selon la revendication 1, dans laquelle ladite composition de polymère de polypropylène comprend un mélange d'au moins deux polypropylènes, l'un ayant un indice de fluidité à chaud inférieur à 0,5 dg/min et au moins un autre ayant un indice de fluidité à chaud supérieur à 3 dg/min.

4. Composition selon la revendication 1, dans laquelle ladite composition de polymère de polypropylène comprend un mélange d'au moins trois polypropylènes, l'un ayant un indice de fluidité à chaud inférieur à 1 dg/min, un deuxième ayant un indice de fluidité à chaud dans la gamme de 1 à 4 dg/min et un troisième ayant un indice de fluidité à chaud supérieur à 4 dg/min.

5. Composition selon la revendication 1, dans laquelle ladite composition de polymère de polypropylène comprend un homopolymère de polypropylène.

6. Composition selon la revendication 1, dans laquelle ledit caoutchouc est choisi dans le groupe constitué par les copolymères éthylène/propylène, les terpolymères éthylène/propylène/diène non conjugué et les mélanges de ceux-ci.

7. Composition selon la revendication 1, qui contient en outre un composant polymère thermoplastique supplémentaire différent du composant (a).

8. Composition selon la revendication 1, qui contient en outre : 1 à 200 parties en poids d'une huile de mise en oeuvre du caoutchouc pour 100 parties en poids dudit caoutchouc.
